# EUROPÄISCHE PATENTSCHRIFT

(11) **EP 0 687 642 B1**
(45) Veröffentlichungstag und Bekanntmachung des Hinweises auf die Patenterteilung: **27.01.1999**
(21) Anmeldenummer: 94106111.1
(22) Anmeldetag: 19.04.1994
(51) Int. Cl.: B65H 75/34

(54) **Vorrichtung zum Speichern sowie zum Auf- und Abwickeln eines flexiblen, biegsamen Stabes**
Device for storing and also for winding and unwinding a flexible rod
Dispositif pour emmagasiner et aussi pour enrouler et dérouler un élément allongé flexible

(43) Veröffentlichungstag der Anmeldung: 20.12.1995
(73) Patentinhaber: Cielker, Werner, D-54587 Birgel (DE)
(72) Erfinder: Cielker, Werner, D-54587 Birgel (DE)
(74) Vertreter: Wanischeck-Bergmann, Axel, Dipl.-Ing.

(56) Entgegenhaltungen:
- EP-A- 0 403 671
- DE-U- 1 911 053
- US-A- 2 913 222

## Beschreibung

Die Erfindung bezieht sich auf eine Vorrichtung zum Speichern sowie zum Auf- und Abwickeln eines flexiblen, biegsamen Stabes für das Einziehen von Kabeln in Kabelschutzrohre, wobei ein Haspelrad mittels einer Drehachse an einem Gestell drehbar gelagert ist und wobei das Haspelrad von der Drehachse ausgehend radial verlaufende Haspelradspeichen aufweist, welche am äußeren Umfang des Haspelrades so umgebogen sind, daß sich der Stab auf der Innenseite in Windungen anlegt.

Eine Vorrichtung der zuvor angegebenen Gattung ist aus der EP 0403671 A1 bekannt. Bei dieser Vorrichtung liegt der flexible, biegsame Stab in Windungen auf der Innenseite des äußeren Umfanges des Haspelrades an, weil dem flexiblen Stab eine Spannung innewohnt, die bestrebt ist, den Stab möglichst geradlinig bzw. gestreckt zu halten. Das Haspelrad weist Speichen auf, die am äußeren Umfang etwa halbkreisförmig umgebogen sind und die an ihren Enden mit einem ringsumlaufenden Verbindungs- und Verstärkungsring verbunden sind. Um den Stab aus dem Haspelrad herausziehen zu können, muß die eine Seite des Haspelrades innerhalb des umlaufenden Ringes völlig offen sein. Bei dieser Vorrichtung muß der Handwerker den flexiblen Stab von Hand aus dem Haspelrad herausziehen, wobei sich das Haspelrad entsprechend um eine Drehachse dreht. Der Stab muß dann von Hand in ein Kabelschutzrohr eingeführt und durch das Kabelschutzrohr bis zum anderen Ende geschoben werden. Hier wird dann das in das Kabelschutzrohr einzuziehende Kabel am Ende des Stabes befestigt und unter Zurückziehen des flexiblen Stabes in das Kabelschutzrohr eingezogen. Gleichzeitig muß der flexible Stab wieder in das Haspelrad eingeschoben werden, wobei er sich wegen der besagten Innenspannung wieder in Windungen anlegt. Diese Vorgänge lassen sich bei geringen Längen der Kabelschutzrohre verhältnismäßig unproblematisch durchführen. In der Praxis haben aber die Kabelschutzrohre sehr große Längen von mehreren hundert Metern und weisen auch oftmals Krümmungen und Unregelmäßigkeiten auf. Dadurch wird die Reibung zwischen dem Stab und dem Kabelschutzrohr mit zunehmender Länge immer größer, so daß die Kraft des Handwerkers nicht mehr ausreicht, den Einziehvorgang ordnungsgemäß durchzuführen.

Zum Stand der Technik wird noch die DE 36 36 943 C2 genannt, woraus ein ähnliches Einziehgerät bekannt ist, bei dem die gleichen Probleme vorliegen, die zuvor beschrieben sind.

Eine Vorrichtung gemäß dem Oberbegriff des Anspruchs 1 ist aus DE-U-1 911 053 bekannt.

Der Erfindung liegt die Aufgabe zugrunde, eine Vorrichtung zu schaffen, die eine einfache Bedienung gestattet und bei der es möglich ist, große Kräfte auf den flexiblen Stab zu übertragen und somit Kabel über eine sehr große Länge eines Kabelschutzrohres einzuziehen.

Ausgehend von der zu Anfang angegebenen Vorrichtung wird die gestellte Aufgabe erfindungsgemäß dadurch gelöst, daß das Haspelrad mit einem Antrieb versehen ist, daß am äußeren Umfang des Haspelrades ein ringsum laufender Spalt vorgesehen ist, in welchem ein feststehender Ring angeordnet ist, daß der feststehende Ring eine Auslaßöffnung für den Stab aufweist, und daß zwischen den einander gegenüberliegenden Haspelradspeichen mit Abstand vom äußeren Umfang des Haspelrades innere Anlagestücke für den Stab befestigt sind.

Vorteilhafte Ausgestaltungen der Erfindung ergeben sich aus den Unteransprüchen.

In der Zeichnung sind Ausführungsbeispiele der Erfindung im Schema dargestellt, und zwar zeigen
Figur 1 eine Seitenansicht auf die Vorrichtung in Betriebsstellung,
Figur 2 einen Schnitt hierzu gemäß Schnittlinie II-II in Figur 1,
Figur 3 einen Ausschnitt gemäß Linie III in Figur 1 in vergrößertem Maßstab,
Figur 4 eine Seitenansicht entsprechend Figur 1, jedoch in gekippter Transportstellung,
Figur 5 eine Seitenansicht entsprechend Figur 1, jedoch in einer anderen Ausführung,
Figur 6 einen Ausschnitt aus Figur 5 in vergrößertem Maßstab mit einer alternativen Betriebsstellung,
Figur 7 einen Ausschnitt gemäß Figur 6, jedoch in einer anderen Betriebsstellung und
Figur 8 einen Teilschnitt gemäß Schnittlinie VIII-VIII in Figur 5.

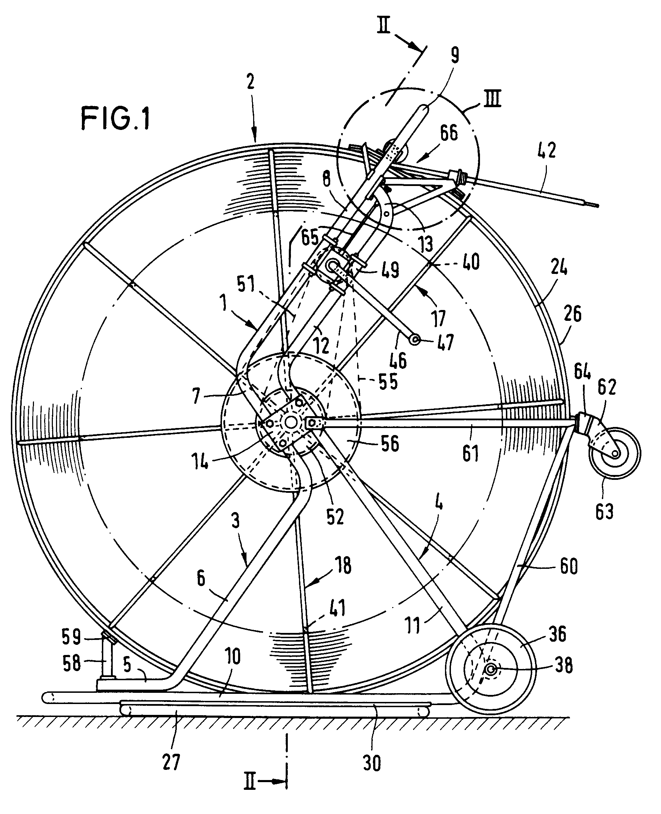

Die Figuren 1 bis 4 zeigen ein Ausführungsbeispiel einer erfindungsgemäßen Vorrichtung. In einem generell mit 1 bezeichneten Gestell ist ein Haspelrad 2 drehbar gelagert. Das Gestell weist ein einstückiges Gestellrohr 3 und zwei weitere zu beiden Seiten des Haspelrades vorgesehene Gestellrohre 4 auf. Das Gestellrohr 3 ist einstückig ausgebildet und ist zu beiden Seiten des Haspelrades 2 etwa Z-förmig gebogen. Es besitzt zu beiden Seiten des Haspelrades waagerechte untere Rohrteile 5, schräg aufwärts gerichtete Rohrteile 6, Zwischenrohrteile 7 und weitere schräg aufwärts gerichtete Rohrteile 8, die am oberen Ende in einen oberen Rohrbogen 9 übergehen. Die beiden weiteren Rohrteile zu beiden Seiten des Haspelrades 2 weisen jeweils einen unteren waagerechten Rohrteil 10, einen schräg aufwärts gerichteten Rohrteil 11 und einen abgebogenen schräg aufwärts gerichteten Rohrteil 12 auf, wobei der letztere mit einem Endbogen 13 an dem Rohrteil 8 des Rohres 3 befestigt ist, wie Figur 1 verdeutlicht. Wie Figur 1 ferner veranschaulicht, verlaufen das Rohrteil 7 und das obere Ende des Rohrteiles 11 im wesentlichen parallel zueinander, und zwar mit einem solchen Abstand, daß an ihnen zu beiden Seiten des Haspelrades 2 Achslagerplatten 14 und 15 befestigt sind, in denen sich die Lager für die Drehachse 16 des Haspelrades befinden. Die beiderseitigen Rohrteile 5 und 10 sind fest miteinander verbunden.

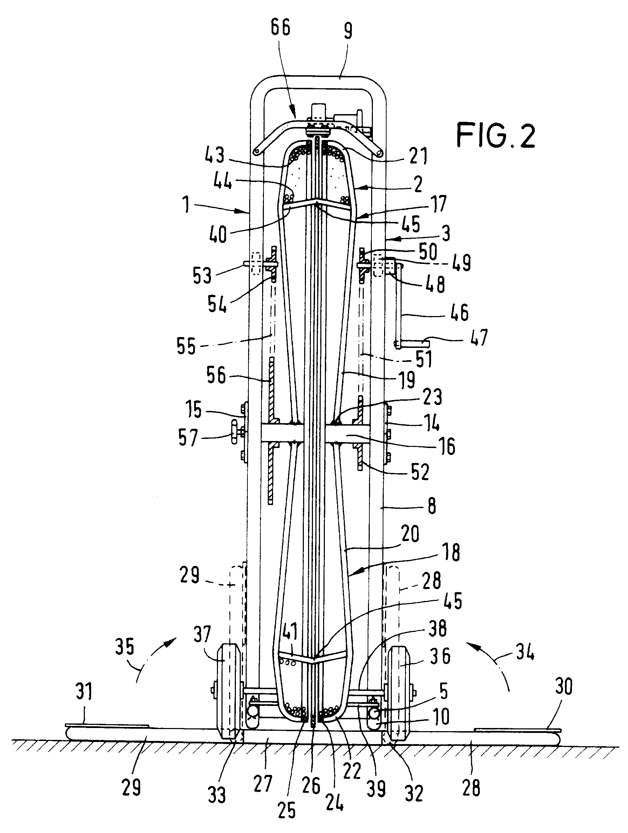

Das Haspelrad 2 weist eine Anzahl Haspelradspeichen 17, 18 auf, die an ihrem inneren Ende an der Drehachse 16 bei Bezugszeichen 23 befestigt bzw. angeschweißt sind. Die beiderseitigen Speichenteile 19, 20 verlaufen, wie Figur 2 zeigt, leicht trapezförmig erweiternd nach außen, woran sich nach innen umgebogene Speichenbögen 21, 22 anschliessen. Am äußeren Umfang des Haspelrades 2 ist zwischen den beiderseitigen Enden der Speichenbögen 21, 22 ein ringsumlaufender Spalt gebildet, in welchem ein feststehender Ring 26 mit einer nachfolgend erläuterten Auslaßöffnung 67 für den Stab 42 angeordnet ist. Zur Erhöhung der Stabilität des Haspelrades und zu einer besseren Führung gegenüber dem feststehenden Ring 26 sind die äußeren Enden der Haspelradspeichen 17, 18 vorteilhafterweise an Ringen 24 und 25 befestigt, welche sich mit Spiel zu beiden Seiten des feststehenden Ringes 26 befinden.

Zwischen den einander gegenüberliegenden Haspelradspeichen 17, 18 sind mit Abstand vom äußeren Umfang des Haspelrades 2 innere Anlagestücke 40 (Figur 2) befestigt, die dazu dienen, daß sich der flexible Stab 42 beim Aufwickeln in Windungen 44 auf der Außenseite dieser Anlagestücke 40 anlegen kann. Dies hat den wesentlichen Vorteil, daß der flexible Stab 42 beim Aufwickeln in das Haspelrad 2 nicht unzulässig hohen Biegebeanspruchungen unterworfen wird. Da das Haspelrad 2, wie nachfolgend noch ausführlich beschrieben ist, mit einem Antrieb versehen ist, würde sich der flexible Stab um die Achse des Haspelrades winden, wenn die besagten Anlagestücke 40 nicht vorhanden wären. Dadurch würde der flexible Stab unzulässig stark gebogen, so daß er bleibende Verformungen aufweisen würde. Wie Figur 2 ferner zeigt, sind die Anlagestücke 40 leicht nach außen gebogen oder haben etwa in der Mitte einen entsprechenden leichten Knick, der mit dem Bezugszeichen 45 bezeichnet ist. Auf diese Weise ergibt sich der Vorteil, daß sich der flexible Stab 42 in besser geordneten Windungen 44 anlegt, d.h. die Windungen verteilen sich gleichmäßiger nach außen hin. Derartige Anlagestücke 40 und 41 sind zwischen allen sich gegenüberliegenden Haspelradspeichen vorgesehen. Wenn der flexible Stab 42 im gespeicherten Zustand keinen Zugkräften mehr unterworfen wird bzw. wenn der Stab 42 aus dem Haspelrad ausgeschoben wird, kann er sich in Windungen 43 auf der Innenseite der Speichenbögen 21, 22 anlegen.

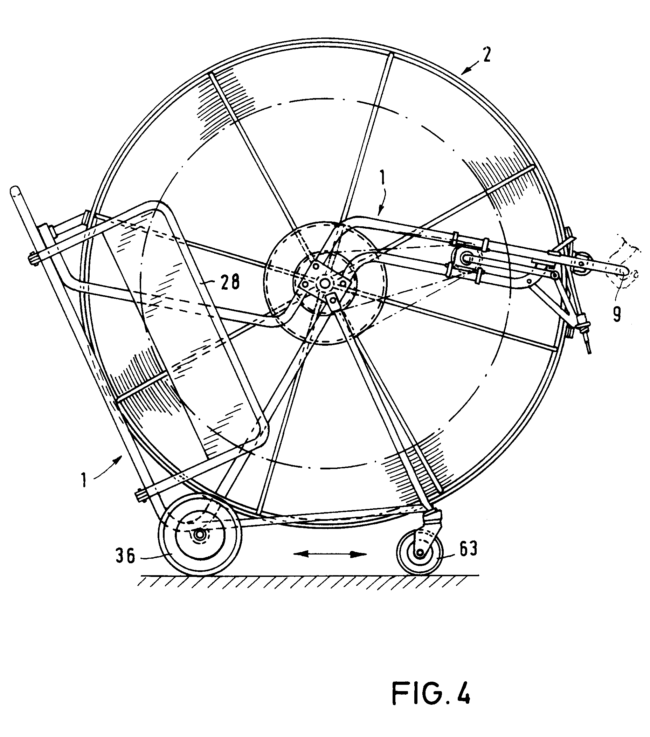

Die Figuren 1 und 2 veranschaulichen noch weitere vorteilhafte Ausgestaltungen. Danach ist das Gestell 1 mit einer Gestellauflage 27 versehen, die mit den Rohrteilen 10 verbunden ist. An den beiden Seiten der Gestellauflage sind Aufstellrahmen 28, 29 mit Aufstellplatten 30, 31 schwenkbar angebracht. Figur 2 zeigt die Betriebsstellung, d.h. die auseinandergeklappte Stellung der Aufstellrahmen 28, 29 mit den Aufstellplatten 30, 31. Sie dienen dazu, daß der Bedienungsmann bei Betätigung des Antriebes einen festen Stand hat, bei Betätigung des Antriebes entsprechende Kräfte aufwenden kann und verhindert wird, daß die Vorrichtung angehoben wird. In Transportstellung gemäß Figur 4 können die Aufstellrahmen 28, 29 mit den Aufstellplatten 30, 31 um Schwenklager 32, 33 in Richtung der Pfeile 34, 35 nach oben hin geklappt werden. Das Gestell 1 weist ferner zwei Laufräder 36 und 37 auf, die auf einer Radachse 38 sitzen, die ihrerseits über geeignete Konsolen oder dergleichen an den beiderseitigen Gestellrohren 4, und zwar zweckmäßigerweise im Bereich der Krümmung zwischen den Rohrteilen 10 und 11, befestigt ist. Zur besseren Stabilisierung des Gestells 1 sind noch zweckmäßigerweise zwischen den Rohrteilen 5 Verbindungsstreben 39 vorgesehen. Weitere Verbindungsstreben können auch noch zwischen den Rohrteilen 10 angeordnet werden.

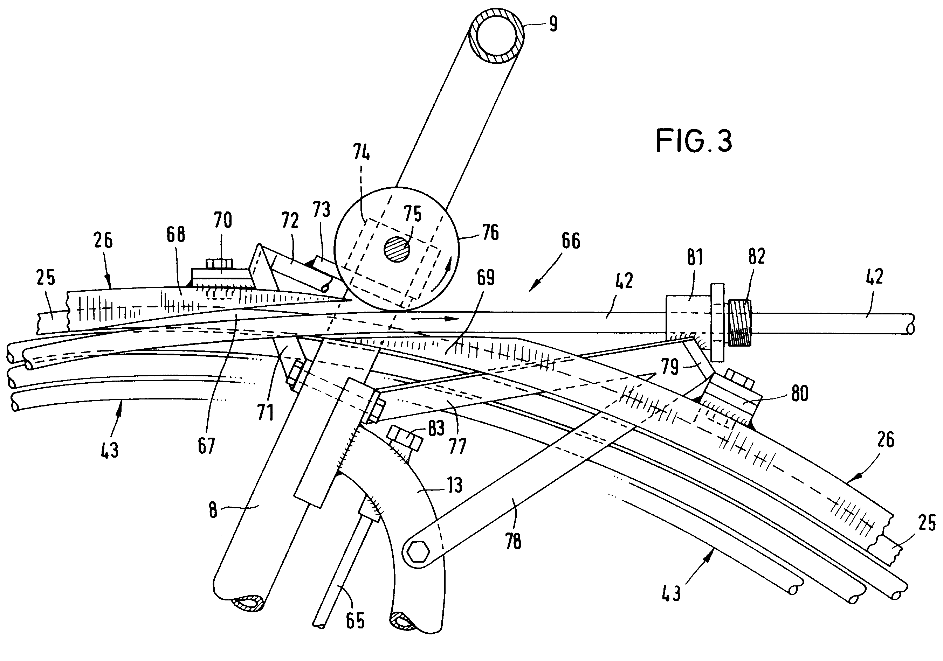

Bei dem Ausführungsbeispiel gemäß den Figuren 1 bis 4 ist der Antrieb als Handantrieb ausgebildet. Der Handantrieb weist eine Handkurbel 46 mit einem drehbaren Kurbelgriff 47 auf. Die Handkurbel ist zweckmäßigerweise mit einer Aufsteckmuffe 48 versehen, die einfach auf einen Bolzen aufgesteckt werden kann, der am äußeren Ende beispielsweise vierkantig oder sechskantig ausgebildet sein kann. Der Bolzen ist nach innen zu einer Drehachse verlängert, die in einem Kurbellager 49 gehalten ist. Am inneren Ende sitzt ein Kettenrad 50, welches über eine Kette 51 mit einem weiteren Kettenrad 52 verbunden ist. Das Kettenrad 52 ist auf der Drehachse 16 des Haspelrades befestigt. Zwischen den Kettenrädern 50 und 52 ist ein geeignetes Untersetzungsverhältnis gewählt. Vorteilhafterweise sind gemäß Figur 2 auf beiden Seiten des Haspelrades 2 die Kettenräder 50, 52 einerseits und Kettenräder 54, 56 andererseits mit entsprechenden Ketten 51 und 55 vorgesehen. Dabei ist das Kettenrad 56 mit einem wesentlich größeren Durchmesser als der Kettenrad 52 ausgebildet, so daß das Untersetzungsverhältnis wesentlich größer ist. Je nach den zu übertragenden Zug- oder Druckkräften kann wahlweise entweder der eine oder der andere Kettenantrieb verwendet werden, wobei die Handkurbel 46 mit der Aufsteckmuffe einfach auf den Steckansatz 53 des anderen Kettenantriebs aufgesteckt werden kann. Es können aber auch auf beiden Seiten Handkurbeln vorgesehen werden, so daß beiden Kettentriebe durch zwei Bedienungspersonen gleichzeitig betätigt werden können. Im Bereich des einen Endes der Drehachse 16 ist zweckmäßigerweise eine Bremse vorgesehen, die durch ein Handrad 57 betätigt werden kann. Das Kurbellager 49 für die Kettentriebe ist zweckmäßigerweise im oberen Teil des Gestells 1, und zwar zwischen den im wesentlichen parallel zueinander verlaufenden Rohrteilen 8 und 12 der Rohre 3 und 4, angeordnet. Außerdem ist die Befestigung bzw. Halterung des Kurbellagers 49 so gewählt, daß durch einen Kettenspanner 65 mit einer Spannschraube 83 (Figur 3) die betreffende Kette gespannt werden kann.

Eine weitere Ausgestaltung besteht darin, daß unter einem Winkel zu der Radachse 38 bzw. den Laufrädern 36, 37 mindestens ein weiteres Stützrad 63 an dem Gestell 1 derart angeordnet ist, daß das Stützrad 63 nach Schwenken des Gestells 1 mitsamt des Haspelrades 2 um diesen Winkel in Transportstellung kommt, wie dies in Figur 4 dargestellt ist. Das Stützrad 63 ist in einer konsolenartigen Radhalterung 62 drehbar gelagert, wobei die Radhalterung 62 schwenkbar in einer Befestigungsvorrichtung 64 gehalten sein kann. Die Befestigungsvorrichtung 64 und damit auch das Stützrad 63 sind an Streben 60, 61 zu beiden Seiten des Haspelrades befestigt, die mit den Rohrteilen 11 ein Dreieck bilden. Die Befestigungsvorrichtung 64 ist auf der Innenseite mit dem beschriebenen feststehenden Ring 26 verbunden. Eine weitere Befestigungsvorrichtung 59 für den feststehenden Ring 26 ist am oberen Ende einer Stütze 58 vorgesehen, die unter Zwischenschaltung eines Zwischenstückes mit den unteren Rohrteilen 5 des Gestellrohres 3 verbunden ist. Der feststehende Ring 26 ist außer mittels der Befestigungsvorrichtungen 59 und 64 noch mit mindestens einer weiteren Befestigungsvorrichtung auf dem Umfang des Haspelrades 2 mit dem Gestell 1 fest verbunden. Diese dritte Befestigungsvorrichtung 66 befindet sich im Bereich der Auslaßöffnung 67 für den Stab 42, die anhand der Figur 3 näher erläutert wird. Zweckmäßigerweise befindet sich die Auslaßöffnung 67 am oberen Scheitel des Haspelrades 2. Die Auslaßöffnung 67 wird gemäß Figur 3 durch gegenseitige keilförmige Abschrägungen 68 und 69 der Enden des feststehenden Ringes 46 gebildet, so daß der Ring 26 an dieser Stelle unterbrochen ist und die keilförmigen Abschrägungen gleichzeitig eine gute Führung für den Stab 42 gewährleisten. Das keilförmige Ende 68 ist über eine Befestigungsvorrichtung 70 und über Stützen 71 und 72 sowie mittels einer Platte 73 mit entsprechenden Teilen des Gestells verbunden. Das andere keilförmige Ende 69 ist über eine weitere Befestigungsvorrichtung 80 unter Zwischenschaltung eines Verbindungsstückes 79 und weiterer Stützen 77 und 78 ebenfalls mit Teilen des Gestells fest verbunden.

Im Bereich der Auslaßöffnung 67 ist vorteilhafterweise noch eine Andrückrolle 76 vorgesehen, welche an dem Stab 42 anliegt. Die Andrückrolle 76 ist mit einer Rollenachse 75 in einem Rollenlager 74 gehalten. Diese Rolle dient zur besseren Führung des Stabes 42 sowohl beim Ausschieben als auch beim Einziehen. Die Andrückrolle 76 kann mit einem Zählwerk versehen oder mit einem separaten Zählwerk verbunden werden, welches die Länge des ausgeschobenen Teils des Stabes 42 anzeigt.

Figur 3 veranschaulicht ferner, daß mit möglichst geringem Abstand von der Auslaßöffnung 67 eine Stabführung 81, beispielsweise in Form einer zylindrischen Hülse, vorgesehen ist, welche an dem Verbindungsstück 79 oder an geeigneten Bauteilen des Gestells befestigt ist. Am äußeren Ende ist die Stabführung 81 mit einem Verbindungsanschluß 82, z.B. einem Schraubanschluß, versehen. Dieser Verbindungsanschluß 82 dient zur Anbringung eines druck- und zugfesten, biegsamen Führungsschlauchs, der den Stab 42 umgibt und der in der Praxis bis zur Eingangsstelle in das betreffende Kabelschutzrohr reicht, so daß der Stab 42 auch bei großer Druck- oder Zugbelastung nicht seitlich ausweichen kann.

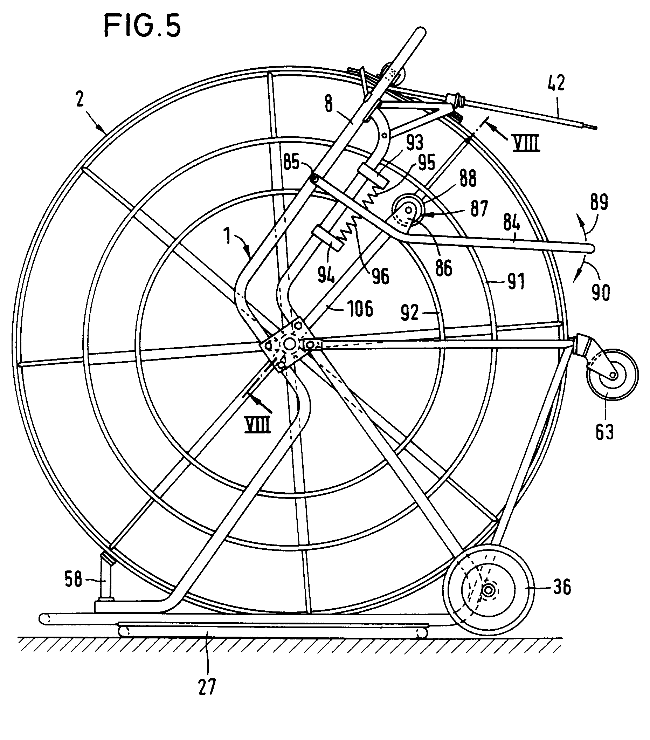

Die Figuren 5 bis 8 zeigen ein anderes Ausführungsbeispiel der erfindungsgemäßen Vorrichtung, die in der Grundkonstruktion im wesentlichen mit dem Ausführungsbeispiel nach den Figuren 1 bis 4 übereinstimmt, so daß für die gleichen oder gleich wirkenden Teile die gleichen Bezugszeichen verwendet worden sind und die vorhergehende Beschreibung sinngemäß auch auf dieses Ausführungsbeispiel gilt. Der Unterschied zwischen den beiden Ausführungsbeispielen besteht in der Hauptsache in dem unterschiedlichen Antrieb. Bei dem Ausführungsbeispiel nach den Figuren 5 bis 8 weist der Antrieb einen Elektrogetriebemotor 87 auf, welcher wahlweise an ein Stromnetz, einen Akkumulator oder an ein auf den Baustellen üblicherweise vorhandenes Notstromaggregat anschließbar ist. Grundsätzlich könnte der Elektrogetriebemotor anstelle der Handkurbel bei dem Ausführungsbeispiel nach den Figuren 1 bis 4 angebaut werden, so daß er mit den entsprechenden Kettentrieben arbeiten würde. Bei diesem Ausführungsbeispiel müßte ein Elektromotor gewählt werden, der in der Laufrichtung umschaltbar ist und der mit einer einstellbaren Rutschkupplung versehen ist, um zu verhindern, daß unzulässig hohe Kräfte auf den flexiblen Stab 42 ausgeübt werden.

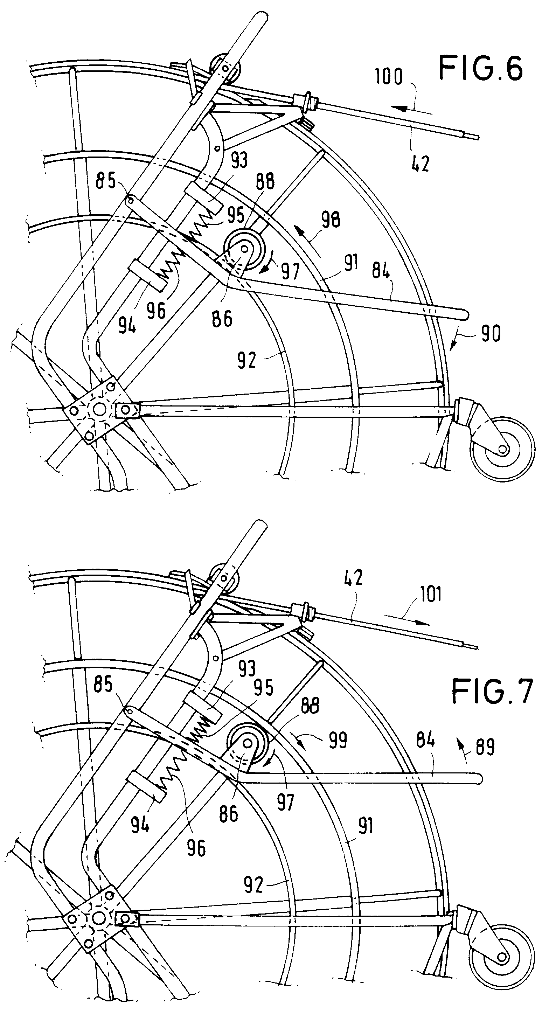

Das Ausführungsbeispiel gemäß den Figuren 5 bis 8 zeigt eine besonders einfach bedienbare Antriebsvorrichtung. Danach ist der Elektrogetriebemotor 87 mittels einer Konsole 86 an einem Schwenkhebel 84 befestigt, welcher seinerseits an einem Gelenk 85 am Gestell 1, und zwar zweckmäßigerweise im mittleren Bereich des Rohrteiles 8, gelagert ist. Auf der Antriebswelle des Elektrogetriebemotors 87 sitzt ein Reibrad 88, welches wahlweise entsprechend der gewünschten Drehrichtung 98 oder 99 des Haspelrades 2 an einem inneren Zylinderring 92 oder an einem äußeren Zylinderring 91 andrückbar ist. In Figur 5 befindet sich das Reibrad 88 in einer neutralen Stellung. Wenn der Schwenkhebel 84 in Richtung des Pfeils 89 nach oben hin geschwenkt wird, kommt das Reibrad in Berührung mit dem äußeren Zylinderring 91. Wenn der Elektrogetriebemotor und damit das Reibrad 88 eine vorgegebene Drehrichtung 97 hat, dreht sich das Haspelrad in Richtung des Pfeils 99 (Figur 7). Wenn dagegen der Schwenkhebel in Richtung des Pfeils 90 nach unten gedrückt wird, kommt das Reibrad bei gleicher vorgegebener Drehrichtung 97 mit dem inneren Zylinderring 92 in Berührung, so daß sich dann eine entgegengesetzte Drehrichtung 98 für das Haspelrad ergibt. In dem ersten Falle gemäß Figur 7 wird der Stab 42 in Richtung des Pfeils 101 aus dem Haspelrad ausgeschoben, während der Stab 42 gemäß Figur 6 in Richtung des Pfeils 100 bewegt und in das Haspelrad eingeschoben wird.

Eine weitere vorteilhafte Ausgestaltung besteht darin, daß an dem Gestell 1, und zwar zweckmäßigerweise im mittleren Bereich des oben beschriebenen Rohrteiles 12, zu beiden Seiten des Schwenkhebels 84 Federhalter 93 und 94 befestigt sind. Zwischen den Federhaltern 93, 94 einerseits und dem Schwenkhebel 84 andererseits sind Druckfedern 95 und 96 eingesetzt, die den Schwenkhebel 84 und das Reibrad 88 bei Nichtbetätigung in eine neutrale Mittellage gemäß Figur 5 drücken. Auf diese Weise wird die Betätigung der Antriebsvorrichtung wesentlich erleichtert.

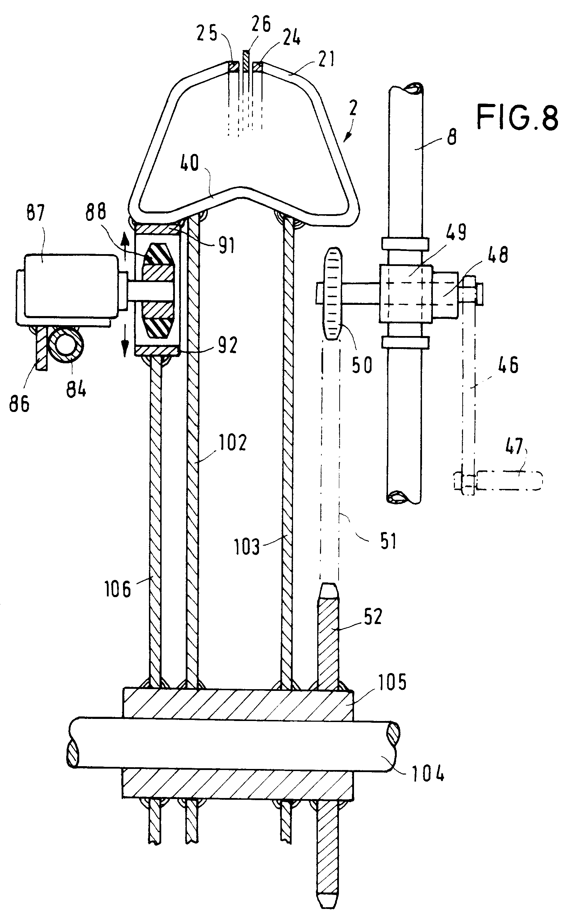

Wie Figur 8 zeigt, sind bei diesem Ausführungsbeispiel die Speichen 102, 103 des Haspelrades 2 anders ausgebildet und angeordnet wie vergleichsweise nach Figur 2, und zwar verlaufen die Speichen 102, 103 parallel zueinander, sind am inneren Ende auf einer umlaufenden Lagerbuchse 105 befestigt, die ihrerseits auf einer feststehenden Achse 104 sitzt. Die oberen Enden der Speichen 102, 103 sind auf den inneren Seiten der Anlagestücke 40 so befestigt, daß insbesondere neben der Speiche 102 auf deren Außenseite genügend Platz für die Anordnung der Zylinderringe 91 und 92 verbleibt. Dabei ist der äußere Zylinderring 91 auf der Unterseite der Anlagestücke 40 befestigt, während der innere Zylinderring 92 an speichenartigen Stützen 106 befestigt, z.B. angeschweißt ist. Figur 8 zeigt ferner, daß zusätzlich zu dem Elektromotorantrieb auf der anderen Seite des Haspelrades 2 ein Handkurbelantrieb vorgesehen sein kann, der alternativ zu dem Elektromotorantrieb betätigt werden kann. Wenn der Elektromotorantrieb aber betätigt wird, muß in jedem Falle zur Vermeidung einer Verletzungsgefahr die Handkurbel 46 mit dem Handgriff 47 abgenommen werden.

## Patentansprüche

1. Vorrichtung zum Speichern sowie zum Auf- und Abwickeln eines flexiblen, biegsamen Stabes (42) für das Einziehen von Kabeln in Kabelschutzrohre, mit einem auf einer Drehachse (16) eines Gestells (1) drehbar gelagerten, zwei Hälften aufweisenden Haspelrad (2), welches Haspelrad (2) von der Drehachse ausgehend radial verlaufende Haspelradspeichen (17, 18) aufweist und an seinem äußeren Umfang einen umlaufenden Spalt hat, in dem ein feststehender Ring (26) mit einer Auslaßöffnung (67) für den Stab (42) angeordnet ist, **dadurch gekennzeichnet,**
daß die Speichen (17, 18) der beiden Hälften des in dem Gestell (1) gelagerten Haspelrades (2) am äußeren Umfang des Haspelrades (2) aufeinander zu umgebogen sind, so daß sich der Stab (42) auf der Innenseite in Windungen (43) anlegt,
daß das Haspelrad (2) einen auf die Drehachse (16) wirkenden Antrieb (46, 47, 50, 51, 52) aufweist und daß die beiden Hälften des Haspelrades (2) über innere Anlagestücke (40) für den Stab (42) unlösbar miteinander verbunden sind, welche Anlagestücke (40) zwischen den einzelnen, einander gegenüberliegenden Haspelradspeichen (17, 18) mit Abstand vom äußeren Umfang des Haspelrades (2) befestigt sind.

2. Vorrichtung nach Anspruch 1, dadurch gekennzeichnet, daß die äußeren Enden der Haspelradspeichen (17, 18) an Ringen (24, 25) befestigt sind, welche sich mit Spiel zu beiden Seiten des feststehenden Ringes (26) befinden.

3. Vorrichtung nach Anspruch 1 oder 2, dadurch gekennzeichnet, daß die Auslaßöffnung (67) im Bereich des oberen Scheitels des Haspelrades (2) vorgesehen ist.

4. Vorrichtung nach einem der vorhergehenden Ansprüche, dadurch gekennzeichnet, daß die Anlagestücke (40) leicht nach außen gebogen oder geknickt sind.

5. Vorrichtung nach einem der vorhergehenden Ansprüche, dadurch gekennzeichnet, daß der Antrieb eine Handkurbel (46, 47) aufweist, welche in dem Gestell (1) gelagert ist und welche über Kettenräder (50, 52) und mittels einer Kette (51) mit der Drehachse (16) des Haspelrades (2) verbunden ist.

6. Vorrichtung nach Anspruch 5, dadurch gekennzeichnet, daß auf beiden Seiten des Haspelrades (2) Kettenräder (50, 52; 54, 56) mit unterschiedlichen Untersetzungsverhältnissen und entsprechenden Ketten (51, 55) vorgesehen sind.

7. Vorrichtung nach Anspruch 6, dadurch gekennzeichnet, daß die Handkurbel (46, 47) mittels einer Aufsteckmuffe (48) leicht aufsteckbar und abnehmbar ist.

8. Vorrichtung nach einem der vorhergehenden Ansprüche, dadurch gekennzeichnet, daß der feststehende Ring (26) an mindestens drei Stellen (59, 64, 70, 80) auf dem Umfang des Haspelrades (2) mit dem Gestell (1) fest verbunden ist.

9. Vorrichtung nach einem der vorhergehenden Ansprüche, dadurch gekennzeichnet, daß die Auslaßöffnung (67) für den Stab (42) durch gegenseitige keilförmige Abschrägungen (68, 69) der unterbrochenen Enden des feststehenden Ringes (26) gebildet ist.

10. Vorrichtung nach einem der vorhergehenden Ansprüche, dadurch gekennzeichnet, daß im Bereich der Auslaßöffnung (67) eine Andrückrolle (76) vorgesehen ist, welche an dem Stab (42) anliegt.

11. Vorrichtung nach Anspruch 10, dadurch gekennzeichnet, daß die Andrückrolle (76) mit einem Längenzählwerk versehen oder verbunden ist.

12. Vorrichtung nach einem der vorhergehenden Ansprüche, dadurch gekennzeichnet, daß mit möglichst geringem Abstand von der Auslaßöffnung (67) eine Stabführung (81) mit einem Verbindungsanschluß (82) für einen druck- und zugfesten, biegsamen Führungsschlauch vorgesehen st.

13. Vorrichtung nach einem der Ansprüche 1 bis 5 und 7 bis 12, dadurch gekennzeichnet, daß der Antrieb einen Elektrogetriebemotor (87) aufweist, welcher wahlweise an ein Stromnetz, einen Akkumulator oder ein Notstromaggregat anschließbar ist.

14. Vorrichtung nach Anspruch 13, dadurch gekennzeichnet, daß der Elektrogetriebemotor (87) mittels einer Konsole (86) an einem Schwenkhebel (84) befestigt ist, welcher seinerseits an einem Gelenk (85) am Gestell (1) gelagert ist, und daß auf der Antriebswelle des Elektrogetriebemotors (87) ein Reibrad (88) sitzt, welches wahlweise entsprechend der gewünschten Drehrichtung (98, 99) des Haspelrades (2) an einem inneren Zylinderring (92) oder an einem äußeren Zylinderring (91) andrückbar ist.

15. Vorrichtung nach Anspruch 14, dadurch gekennzeichnet, daß an dem Gestell (1) zu beiden Seiten des Schwenkhebels (84) Federhalter (93, 94) befestigt sind, und daß zwischen den Federhaltern (93, 94) und dem Schwenkhebel (84) Druckfedern (95, 96) eingesetzt sind, die den Schwenkhebel (84) und das Reibrad (88) bei Nichtbetätigung in eine neutrale Mittellage drücken.

16. Vorrichtung nach einem der vorhergehenden Ansprüche, dadurch gekennzeichnet, daß das Gestell (1) mit einer Gestellauflage (27) versehen ist, an deren beiden Seiten Aufstellrahmen (28, 29) mit Aufstellplatten (30, 31) schwenkbar angebracht sind.

17. Vorrichtung nach einem der vorhergehenden Ansprüche, dadurch gekennzeichnet, daß an dem Gestell (1) unter Zwischenschaltung einer Radachse (38) zwei Laufräder (36, 37) angebracht sind, und daß unter einem Winkel hierzu mindestens ein weiteres Stützrad (63) an dem Gestell (1) derart vorgesehen ist, daß das Stützrad (63) nach Schwenken des Gestells (1) mitsamt des Haspelrades (2) um diesen Winkel in Transportstellung kommt.

18. Vorrichtung nach einem der vorhergehenden Ansprüche, dadurch gekennzeichnet, daß das Gestell (1) ein einstückiges Rohr (3) aufweist, welches zu beiden Seiten des Haspelrades (2) etwa Z-förmig gebogen ist, mit waagerechten unteren Rohrteilen (5), schräg aufwärts gerichteten Rohrteilen (6), Zwischenrohrteilen (7), weiteren schräg aufwärts gerichteten Rohrteilen (8) und einem oberen Rohrbogen (9).

19. Vorrichtung nach Anspruch 18, dadurch gekennzeichnet, daß das Gestell (1) zwei weitere Rohre (4) zu beiden Seiten des Haspelrades (2) aufweist, mit jeweils einem unteren waagerechten Rohrteil (10), einem schräg aufwärts gerichteten Rohrteil (11), einem abgebogenen schräg aufwärts gerichteten Rohrteil (12) und einem Endbogen (13), welcher an dem Rohrteil (8) des Rohres (3) befestigt ist.

20. Vorrichtung nach Anspruch 18 und 19, dadurch gekennzeichnet, daß an den im wesentlichen parallel zueinander verlaufenden Rohrteilen (7, 11) der Rohre (3, 4) Achslagerplatten (14, 15) für die Lager der Drehachse (16) des Haspelrades befestigt sind.

21. Vorrichtung nach einem der Ansprüche 18 bis 20, dadurch gekennzeichnet, daß zwischen den im wesentlichen parallel Zueinander verlaufenden Rohrteilen (8, 12) der Rohre (3, 4) die Kurbellager (49) angeordnet sind.

## Claims

1. Device for storing and also for winding and unwinding a flexible rod (42) for drawing cables into cable protection tubes, comprising a reel (2) rotatably supported on a rotational axle (16) of a stand (1) and having two halves, said reel (2) including reel spokes (17,18) that extend radially from the rotational axle and include on the outer circumference thereof a continuous gap in which a stationary ring (26) is arranged with an outlet opening (67) for the rod (42), characterized in that the spokes (17,18) of both halves of the reel (2) supported in the stand (1) are bent toward each other on the outer circumference of the reel (2), so that the rod (42) takes its bearing on the inside in windings (43), that the reel (2) includes a driving means (46,47,50,51,52) acting upon the rotational axle (16), and that both halves of the reel (2) are undetachably connected to each other by means of inner abutment pieces (40) for the rod (42), said abutment pieces (40) being fixed between the individual mutually opposite reel spokes (17) in a manner spaced from the outer circumference of the reel (2).

2. Device according to claim 1, characterized in that the outer ends of the reel spokes (17,18) are fixed to rings (24,25) which are situated with play on both sides of the stationary ring (26).

3. Device according to claim 1 or 2, characterized in that the outlet opening (67) is provided in the zone of the upper apex of the reel (2).

4. Device according to one of the preceding claims, characterized in that the abutment pieces (40) are slightly outwardly bent or buckled.

5. Device according to one of the preceding claims, characterized in that the driving means includes a crank handle (46,47) which is supported in the stand (1) and connected to the rotational axle (16) of the reel (2) via chain wheels (50,52) and by means of a chain (51).

6. Device according to claim 5, characterized in that on both sides of the reel (2) chain wheels (50,52;54,56) having different step-down ratios and corresponding chains (51,55) are provided.

7. Device according to claim 6, characterized in that the crank handle (46,47) is adapted to be readily attachable and detachable by means of a shell-type socket (48).

8. Device according to one of the preceding claims, characterized in that the stationary ring (26) is rigidly connected to the stand (1) in at least three spots (59,64,70,80) on the circumference of the reel (29).

9. Device according to one of the preceding claims, characterized in that the outlet opening (67) for the rod (42) is formed by mutual wedge-shaped chamfers (68,69) of the discontinuous ends of the stationary ring (26).

10. Device according to one of the preceding claims, characterized in that in the zone of the outlet opening (67) a pressure roller (76) is provided which rests against the rod (42).

11. Device according to claim 10, characterized in that the pressure roller (76) is provided with or connected to a lengths counter.

12. Device according to one of the preceding claims, characterized in that a rod guide (81) having a connection attachment (82) for a pressure and tension-proof flexible guide hose is provided at a smallest possible distance from the outlet opening (67).

13. Device according to one of the claims 1 to 5 and 7 to 12, characterized in that the driving means includes an electric geared motor (87) adapted to be selectively connected to a mains supply, an accumulator or a stand-by unit.

14. Device according to claim 13, characterized in that the electric geared motor (87) is fixed by means of a bracket (86) to a pivoted lever (84), which lever is in turn supported on a joint (85) on the stand (1), and that a frictional wheel (88) is seated on the driving shaft of the electric geared motor (87), which frictional wheel is adapted to be selectively pressed against an inner cylinder ring (92) or an outer cylinder ring (91), corresponding to the desired direction of rotation (98,99) of the reel (2).

15. Device according to claim 14, characterized in that spring holders (93,94) are fixed to the stand (1) on both sides of the pivoted lever (84), and that between the spring holders (93,94) and the pivoted lever (84) pressure springs (95,96) are inserted adapted to urge the pivoted lever (84) and the frictional wheel (88), when the same are not operated, towards a neutral central position.

16. Device according to one of the preceding claims, characterized in that the stand (1) is provided with a stand support (27) having pivotally connected to its both sides erecting frames (28,29) including erecting plates (30,31).

17. Device according to one of the preceding claims, characterized in that two running wheels (36,37) are mounted to the stand (1), with an axletree (38) inserted there between, and that under an angle relative thereto at least one additional support wheel (63) is provided on the stand (1) in such a manner that the support wheel (63) assumes its transport position after the stand (1) has been pivotally moved together with the reel (2) by said angle.

18. Device according to one of the preceding claims, characterized in that the stand (1) includes a one-piece tube (3) approximately bent into Z-shape on both sides of the reel (2), said tube comprising horizontal lower tube members (5), upwardly inclined tube members (6), intermediate tube members (7), further upwardly inclined tube members (8), and an upper tube bend (9).

19. Device according to claim 18, characterized in that the stand (1) includes two further tubes (4) on both sides of the reel (2), said tubes respectively comprising a lower horizontal tube member (10), an upwardly inclined tube member (11), a bent upwardly inclined tube member (12), and an end bend (13) which is fixed to the tube member (8) of the tube (3).

20. Device according to claim 18 and 19, characterized in that the substantially mutually parallel extending tube members (7,11) of the tubes (3,4) have fixed to them journal bearing plates (14,15) for the bearings of the rotational axle (16) of the reel.

21. Device according to one of the claims 18 to 20, characterized in that the crank bearings (49) are arranged between the substantially mutually parallel extending tube members (8,12) of the tubes (3,4).

## Revendications

1. Dispositif pour emmagasiner et aussi pour enrouler et dérouler un élément allongé souple flexible (42) pour tirer des câbles dans des tubes gaines pour câbles, avec une roue dévidoir (2) présentant deux moitiés, positionnée rotative sur un pivot (16) d'un bâti (1), laquelle roue dévidoir (2) présente des rayons de roue dévidoir (17, 18) dans le sens radial partant du pivot et a, sur sa périphérie extérieure, une fente périphérique dans laquelle un anneau fixe (26) avec une ouverture de sortie (67) pour l'élément allongé (42) est placé,
caractérisé en ce
que les rayons (17, 18) des deux moitiés de la roue dévidoir (2) positionnée dans le bâti (1) peuvent être recourbés l'un sur l'autre sur la périphérie extérieure de la roue dévidoir (2) si bien que l'élément allongé (42) repose en spires (43) sur le côté intérieur,
que la roue dévidoir (2) présente un entraînement (46, 47, 59, 51, 52) qui agit sur le pivot (16) et que les deux moitiés de la roue dévidoir (2) sont reliées l'une à l'autre de manière inamovible par des pièces d'appui intérieures (40) pour l'élément allongé (42) qui sont fixées à un certain écart de la périphérie extérieure de la roue dévidoir (2) entre les différents rayons de roue dévidoir (17, 18) opposés les uns aux autres.

2. Dispositif selon la revendication 1, caractérisé en ce que les extrémités extérieures des rayons de la roue dévidoir (17, 18) sont fixées à des anneaux (24, 25) qui se trouvent avec du jeu des deux côtés de l'anneau fixe (26).

3. Dispositif selon la revendication 1 ou 2, caractérisé en ce que l'ouverture de sortie (67) est prévue dans la zone du sommet supérieur de la roue dévidoir (2).

4. Dispositif selon l'une des revendications précédentes, caractérisé en ce que les pièces d'appui (40) sont légèrement courbées ou infléchies vers l'extérieur.

5. Dispositif selon l'une des revendications précédentes, caractérisé en ce que l'entraînement présente une manivelle (46, 47) qui est positionnée dans le bâti (1) et qui est reliée par des roues à chaîne (50, 52) et au moyen d'une chaîne (51) au pivot (16) de la roue dévidoir (2).

6. Dispositif selon la revendication 5, caractérisé en ce que des roues à chaîne (50, 52 ; 54, 56) avec des rapports de réduction différents et des chaînes correspondantes (51, 55) sont prévues des deux côtés de la roue dévidoir (2).

7. Dispositif selon la revendication 6, caractérisé en ce que la manivelle (46, 47) peut facilement être emboîtée et enlevée au moyen d'un manchon à emboîter (48).

8. Dispositif selon l'une des revendications précédentes, caractérisé en ce que l'anneau fixe (26) est relié de manière fixe au bâti (1) en au moins trois endroits (59, 64, 70, 80) sur la périphérie de la roue dévidoir (2).

9. Dispositif selon l'une des revendications précédentes, caractérisé en ce que l'ouverture de sortie (67) pour l'élément allongé est formée par des chanfreins en clavette réciproques (68, 69) des extrémités interrompues de l'anneau fixe (26).

10. Dispositif selon l'une des revendications précédentes, caractérisé en ce qu'un galet de pression (76), qui repose sur l'élément allongé (42), est prévu dans la zone de l'ouverture de sortie (67).

11. Dispositif selon la revendication 10, caractérisé en ce que le galet de pression (76) est pourvu d'un compteur de longueur ou est relié à un compteur de longueur.

12. Dispositif selon l'une des revendications précédentes, caractérisé en ce qu'un guidage pour l'élément allongé (81) est prévu avec le plus faible écart possible par rapport à l'ouverture de sortie (67), guidage avec un raccord de jonction pour un flexible de guidage souple, résistant à la pression et à la traction.

13. Dispositif selon l'une des revendications 1 à 5 et 7 à 12, caractérisé en ce que l'entraînement présente un moteur à transmission électrique (87) qui peut être branché au choix à un réseau électrique, à un accumulateur ou à un groupe électrogène de secours.

14. Dispositif selon la revendication 13, caractérisé en ce que le moteur à transmission électrique (87) est fixé au moyen d'une console (86) à un lever pivotant (84) qui est logé à son tour sur une articulation (85) sur le bâti (1) et qu'un galet de friction (88) est logé sur l'arbre d'entraînement du moteur à transmission électrique (87), galet de friction qui peut être appuyé au choix, selon le sens de rotation souhaité (98, 99) de la roue dévidoir (2), sur une bague cylindrique intérieure (92) ou sur une bague cylindrique extérieure (91).

15. Dispositif selon la revendication 14, caractérisé en ce que des supports de ressort (93, 94) sont fixés sur le bâti (1) des deux côtés du levier pivotant (84) et que des ressorts de pression (95, 96) sont mis en place entre les supports de ressort (93, 94) et le levier pivotant (84), ressorts de pression qui poussent le levier pivotant (84) et le galet de friction (88), en cas de non actionnement, dans une position centrale neutre.

16. Dispositif selon l'une des revendications précédentes, caractérisé en ce que le bâti (1) est pourvu d'un appui de bâti (27) sur les deux côtés duquel des cadres de mise en place (28, 29) avec des plaques de mise en place (30, 31) sont installés pivotants.

17. Dispositif selon l'une des revendications précédentes, caractérisé en ce que deux roues de roulement (36, 37) sont fixées sur le bâti (1) avec un essieu (38) intercalé et qu'en formant un angle avec celles-ci au moins une autre roue d'appui (63) est prévue sur le bâti (1) de telle manière que la roue d'appui (63) vienne, après pivotement du bâti (1) avec la roue dévidoir (2) autour de cet angle, en position de transport.

18. Dispositif selon l'une des revendications précédentes, caractérisé en ce que le bâti (1) présente un tube en une partie (3) qui est recourbé à peu près en forme de Z des deux côtés de la roue dévidoir (2), avec des parties de tube inférieures horizontales (5), des parties de tube orientées en biais vers le haut (6), des parties intermédiaires de tube (7), d'autres parties de tube orientées en biais vers le haut (8) et un coude de tube supérieur (9).

19. Dispositif selon la revendication 18, caractérisé en ce que le bâti (1) présente deux autres tubes (4) des deux côtés de la roue dévidoir (2), avec respectivement une partie de tube inférieure horizontale (10), une partie de tube orientée en biais vers le haut (11), une partie de tube orientée en biais vers le haut recourbée (12) et un arc terminal (13) qui est fixé à la partie de tube (8) du tube (3).

20. Dispositif selon la revendication 18 et 19, caractérisé en ce que des plaques de palier (14, 15) pour les paliers du pivot (16) de la roue dévidoir sont fixées sur les parties de tube substantiellement parallèles les unes aux autres (7, 11) des tubes (3, 4).

21. Dispositif selon l'une des revendications 18 à 20, caractérisé en ce que les paliers de vilebrequin (49) sont placés entre les parties de tube substantiellement parallèles les unes aux autres (8, 12) des tubes (3, 4).
